# EUROPÄISCHE PATENTSCHRIFT

(11) **EP 0 603 781 B1**
(45) Veröffentlichungstag und Bekanntmachung des Hinweises auf die Patenterteilung: **12.08.1998**
(21) Anmeldenummer: 93120499.4
(22) Anmeldetag: 20.12.1993
(51) Int. Cl.: A23G 3/20

(54) **Überziehmaschine zur Verarbeitung von Schokolade und ähnlichen Massen**
Coatingmachine for processing chocolate and similar masses
Machine à enrober pour traitement de chocolat et de masses similaires

(30) Priorität: 23.12.1992 DE 4243814
(43) Veröffentlichungstag der Anmeldung: 29.06.1994
(73) Patentinhaber: SOLLICH GmbH & Co. KG, D-32105 Bad Salzuflen (DE)
(72) Erfinder: Sollich, Helmut, D-24407 Rabenkirchen (DE)
(74) Vertreter: Rehberg, Elmar, Dipl.-Ing.

(56) Entgegenhaltungen:
- DE-A- 3 336 259
- DE-A- 3 710 539

## Beschreibung

Die Erfindung bezieht sich auf eine Überziehmaschine zur Verarbeitung von Schokolade und ähnlichen Massen, mit den in den Oberbegriffen der Ansprüche 1 und 2 angegebenen Merkmalen. Solche Überziehmaschinen, z. B. gemäß der DE-A-37 10 539, dienen dazu, temperierte Schokolade auf Artikel auf einem Gitterband aufzubringen, wobei die Schokolade im Überschuß durch die Überziehmaschine fließt und dabei auch das Gitterband durchdringt sowie mit einer Vielzahl von Teilen der Überziehmaschine in Berührung kommt. Das Gitterband läuft über Umlenkrollen und eine Spannrolle. Eine solche Überziehmaschine weist eine Überziehstation auf, in der die flüssige Schokolade im freien Fall auf die Artikel gelangt. Die Überziehmaschine kann auch mit einer Bodenwallstation ausgestattet sein und/oder ein Gebläse zum Abblasen überschüssiger Schokolade aufweisen. Auch andere Massen als Schokolade, beispielsweise fetthaltige Massen, Überzugsmassen, Karamellmassen u. dgl. können mit einer solchen Überziehmaschine verarbeitet werden.

Bei einem Massewechsel in der Überziehmaschine, also wenn beispielsweise eine dunkle Schokolade zuvor verarbeitet worden ist und nachfolgend Artikel mit einer hellen Schokolade oder gar einer weißen Überzugsmasse behandelt werden sollen, entsteht das Problem, die zuvor verarbeitete Masse aus der Überziehmaschine zu entfernen und sämtliche Teile, die mit dieser Masse in Berührung gekommen sind, zu reinigen, damit dann die neue Masse, z. B. die weiße Überzugsmasse, in die Überziehmaschine eingegeben werden kann.

Zur Durchführung eines solchen Massewechsels ist es bekannt, die Überziehmaschine mit der zuvor verarbeiteten Masse aufzuheizen und zu entleeren, wobei die zuvor verarbeitete Masse über eine Rückförderpumpe hinweggeführt wird. Es wird sodann eine Spülmasse, beispielsweise Kakaobutter oder eine andere Fettlösung in die Überziehmaschine eingebracht. Die Überziehmaschine wird ohne Durchlauf von Artikeln inganggesetzt, so daß die Spülmasse fortlaufend umgewälzt und beispielsweise über eine Überziehstation umläuft. Dabei erreicht die Spülmasse auch einen großen Teil der mit der alten Masse verschmutzten Teile der Überziehmaschine und reinigt diese durch Aufschmelzen mehr oder weniger vollständig. Jedoch werden von der Spülmasse nicht alle Teile der Überziehmaschine erreicht, so daß die Reinigungswirkung nur unvollkommen ist. Die Spülmasse wird am Ende der Reinigung der Überziehmaschine von dieser abgezogen und beispielsweise in der normalen Schokoladeproduktion verarbeitet. Anschließend kann die neue Überzugsmasse eingefüllt werden.

Es ist weiterhin bekannt, die wesentlichen Teile der Überziehmaschine aus Edelstahl auszubilden und an das Entleeren der Überziehmaschine mit der alten Masse eine Naßreinigung mit heißem Wasser unter Druck anzuschließen. Diese Naßreinigung ist in mehrerlei Hinsicht problematisch. Beim Aufbringen eines Sprühstrahles von heißem Wasser auf das Gitterband entsteht eine erhebliche Sprüh- und Verteilungswirkung, so daß die unterhalb des oberen Trums des Gitterbandes angeordneten Aggregate nur sehr unvollkommen erreicht werden. Durch das bei dieser Reinigung notwendigerweise in die Überziehmaschine eingeschleppte heiße Wasser entsteht eine Kontamination, indem günstige Bedingungen für Bakterien geschaffen werden. Um dieser Gefahr entgegenzuwirken, ist es bekannt, dem Reinigungsvorgang mit heißem Wasser einen Trocknungsvorgang durch das Aufblasen von heißer Luft anzuschließen. Auch dabei werden die Einzelteile der Maschine aufgeheizt, und der Trocknungsvorgang wird über einen entsprechend langen Zeitraum durchgeführt. Dennoch werden von der Trocknung nicht alle Teile erfaßt, und es besteht nicht die Möglichkeit zu kontrollieren, ob wirklich alle Teile, die vorher mit heißem Wasser benetzt wurden, auch trocken sind.

In der Patentanmeldung P 42 09 966.8 ist eine Temperier- und Überziehanlage für unterschiedliche Massen, insbesondere weiße und nicht-weiße Schokolade beschrieben, bei der einer Produktionsstraße für Artikel zwei wahlweise in die Produktionsstraße einfahrbare Überziehmaschinen zugeordnet sind, wobei die eine Überziehmaschine für dunkle Überziehmassen und die andere Überziehmaschine für helle Überzugsmassen bestimmt und ausgebildet sind, so daß auf diese Art und Weise ein Massewechsel vermieden bzw. das Problem des Massewechsels durch Verwendung unterschiedlicher Überziehmaschinen gelöst ist. Diese Lösung ist jedoch nur dann möglich, wenn rechts und links der Produktionsstraße genügend Platz für die Überziehmaschinen vorhanden ist. Vielfach ist jedoch dieser Platz nicht gegeben, insbesondere dann nicht, wenn mehrere parallele Produktionsstraßen für Artikel eingerichtet sind.

Für einen an einer Überziehmaschine durchzuführenden Massewechsel ist es auch bereits bekannt, das Gitterband quer zu seiner Laufrichtung aufzuschneiden und auf diese Art und Weise die Schleife des Gitterbandes zu öffnen, damit die unterhalb des oberen Trums des Gitterbandes befindlichen Aggregate gut zugänglich gereinigt werden können. Bei dieser Reinigung müssen dann wieder Spülmassen benutzt werden, die z. B. entweder aus Kakaobutter oder wiederum aus Heißwasser bestehen können. Auch dabei ist die Reinigung entsprechend umständlich, aufwendig und unsicher. Insbesondere muß das durchtrennte Gitterband nach der Reinigung wieder zusammengeflochten werden.

Der Erfindung liegt die Aufgabe zugrunde, eine Überziehmaschine der eingangs beschriebenen Art bereitzustellen, bei der eine Reinigung der Maschinenteile mit einer Spülmasse bei einem Massewechsel mit größerer Sicherheit und verbesserter Zugänglichkeit der Aggregate unterhalb des oberen Trums der Überziehmaschine durchgeführt werden kann.

Erfindungsgemäß wird dies in einer ersten Lösung bei der Überziehmaschine durch die Merkmalen des Anspruchs 1 erreicht.

Die Erfindung geht von dem Gedanken aus, das Gitterband hochhebbar zu gestalten und insbesondere mit Hilfe von Auflagern und Trägern in hochgehobenem Zustand abzustützen, so daß die unterhalb des oberen Trums des Gitterbandes befindlichen Aggregate, also beispielsweise die Rüttelvorrichtung, eine Bodenwallstation, eine Bodenabstreichwelle u. dgl. für die Reinigung mit einer Spülmasse unmittelbar zugänglich sind und die Reinigung damit leichter, einfacher und schneller und mit größerer Sicherheit durchgeführt werden kann. Zwar besitzen auch die bisher bekannten Spanneinrichtungen einen (vergleichsweise kleineren) Spannweg, wie er für das Spannen des Gitterbandes sowie zum Ausgleich von Temperatureinflüssen erforderlich ist. Dieser Spannweg reicht jedoch nicht aus, um bei entspannter Spanneinrichtung das obere Trum des Gitterbandes nennenswert anzuheben. Insoweit muß der Spannweg entsprechend vergrößert werden, so daß sich die Möglichkeit eröffnet, die geschlossene Schleife des Gitterbandes derart anheben zu können, daß die Aggregate unterhalb des angehobenen Gitterbandes von der Seite her frei zugänglich werden.

Eine zweite Lösung ist im Anspruch 2 angegeben.

Bei beiden Lösungen können Mittel zur Halterung des hochgehobenen Gitterbandes, insbesondere am Rahmen der Überziehmaschine angeordnete Auflager zur Aufnahme von Trägern, vorgesehen sein, um die hochgehobene Stellung des Gitterbandes zu sichern. Zum Hochheben des Gitterbandes werden Träger, z. B. Wellenstücke nach der Entspannung der Spanneinrichtung unter das obere Trum des Gitterbandes gesteckt und das obere Trum damit angehoben. Dies geschieht vorzugsweise an zwei weitgehend endständig verteilten Stellen, also am Anfang und am Ende der Überziehmaschine. In hochgehobenem Zustand entsteht zwischen dem hochgehobenen Trum des Gitterbandes und der Oberfläche der Aggregate ein Abstand in der Größenordnung von 20 bis 30 cm, so daß hier ohne weiteres die Spülmasse mit einer Lanze oder Düse gerichtet und ohne Versprühung durch das Gitterband direkt auf die zu reinigenden Aggregate gerichtet werden kann. Vorteilhaft besteht auch die Möglichkeit, diese Aggregate zumindest teilweise so auszubilden, daß sie leicht ergriffen und gereinigt werden können, beispielsweise auch an ihrer Unterseite, die bisher, d. h. bei ordnungsgemäß aufgelegtem Gitterband, nicht zugänglich war. Andererseits erübrigt sich das Aufschneiden des Gitterbandes und das aufwendige Zusammenfädeln nach erbrachter Reinigung. Die Reinigung sollte mit einer Spülmasse, insbesondere Kakaobutter, durchgeführt werden, nicht dagegen mit Heißwasser, so daß nicht die Gefahr einer Kontamination besteht.

Oberhalb des oberen Trums des Gitterbandes kann eine Aufgabestation und/oder ein Gebläse derart hochfahrbar angeordnet sein, daß dann Platz für das Hochheben und Auflagern des Gitterbandes geschaffen ist. Die Aufgabestation dann aus einem Schleierkasten bestehen, über den die flüssige Schokolade in freiem Fall auf die auf dem Gitterband befindlichen Artikel aufgebracht und die Artikel dadurch mit Schokolade umhüllt werden. In der Regel weist eine solche Überziehmaschine auch ein der Aufgabestation nachgeschaltetes Gebläse auf, mit dessen Hilfe und einer lippenartigen Ausströmdüse Luft auf die unter der Aufgabestation behandelten Artikel geblasen wird, um überschüssige flüssige Schokolade von dem Artikel abzublasen und durch das obere Trum des Gitterbandes hindurch in den Kreislauf zurückzuführen. Es ist auch bereits bekannt, die Aufgabestation und/oder das Gebläse, auch mit Hilfe von Motoren und ähnlichen Antrieben, hochfahrbar zu gestalten, jedoch ist diese Hochfahrbarkeit begrenzt auf die Anpassung an die Höhe der auf dem Gitterband zu behandelnden Artikel. Um Platz für das Hochheben und Auflagern des Gitterbandes zu schaffen, damit die wesentlichen zu reinigenden Aggregate der Überziehmaschine frei zugänglich werden, muß die Aufgabestation und/oder das Gebläse in vergleichsweise weit größerem Maße hochfahrbar an der Überziehmaschine angeordnet werden.

Das Gebläse kann dabei auch um eine horizontale Achse quer zur Laufrichtung des Gitterbandes derart schwenkbar angeordnet sein, daß dann, also wenn das Gebläse um die horizontale Achse weggeschwenkt ist, Platz für das Hochheben und Auflagern des Gitterbandes geschaffen ist. An sich sind auch hier schwenkbare Gebläse bekannt. Die Schwenkbarkeit dient jedoch dem Zweck, ausschließlich den Anblaswinkel für die Artikel zu verändern bzw. einzustellen. Bei dem neuerlichen Verschwenken des Gebläses, um Platz für das hochgehobene Gitterband zu schaffen, handelt es sich um eine Verschwenkung entweder des gesamten Gebläses oder des nach unten ragenden Teils des Gebläses um einen Winkel in der Größenordnung von 90°, so daß nach dem Wegschwenken der erforderliche Platz für das Gitterband geschaffen ist.

Es ist auch möglich, daß eine oder beide endseitig angeordneten Umlenkungen zusätzlich oder anstatt eines vergrößerten Spannweges der Spanneinrichtung ausbaubar ausgebildet sind. Diese eine oder beide endseitig angeordneten Umlenkungen bestehen oft aus einer Umlenkwelle oder einer messerartigen Leiste, an denen das Gitterband meist in einem spitzen Winkel umgelenkt wird. Wenn diese Umlenkung oder diese Umlenkungen entfernt werden können, entsteht am Gitterband eine ausreichende freie Länge, um das schleifenartig geschlossene Gitterband in dem erforderlichen Maß anzuheben und an den Auflagern am Rahmen der Überziehmaschine auf hinreichendem Höhenniveau aufzulagern, damit dann problemlos die Reinigung der Aggregate durchgeführt werden kann. In erster Linie wird man die Umlenkung ausbaubar ausbilden, die über keinen eigenen Antrieb verfügt, so daß durch die Ausbaubarkeit kein großer Aufwand entsteht. In der Regel genügt auch diese eine Ausbaubarkeit, die vorzugsweise am Einlaufende der Überziehmaschine angeordnet ist, in Verbindung mit dem vergrößerten Spannweg der Spanneinrichtung, um das vorgesehene Hochhebniveau des Gitterbandes zu erreichen.

Es ist aber auch möglich, daß eine oder beide endseitig angeordnete Umlenkungen am Rahmen der Überziehmaschine hochschwenkbar gelagert sind. Auch damit kann man innerhalb der geschlossenen Schleife des Gitterbandes die erforderliche Beweglichkeit für das Hochheben und Auflagern des Gitterbandes schaffen. Vorteilhaft können dabei eine oder beide endseitig angeordnete Umlenkungen zugleich als Auflage für das hochgehobene Gitterband ausgebildet sein, so daß beispielsweise die Umlenkwellen, die die Umlenkungen bilden, gleichzeitig als Träger fungieren.

Es ist aber auch möglich, daß eine oder beide endseitig angeordneten Umlenkungen in die Auflager am Rahmen der Überziehmaschine einsetzbar sind und damit gleichzeitig die Träger für das hochgehobene Gitterband bilden. Damit entfällt die Schaffung und Benutzung gesonderter Träger für das Gitterband. Die Wellen oder Leisten, die die Umlenkung oder die Umlenkungen bilden, können gleichzeitig als Träger benutzt werden. Dabei sind dann die Auflager am Rahmen der Überziehmaschine entsprechend anzupassen bzw. in ihrem gegenseitigen Abstand so anzuordnen, daß durch die aufgelegten Umlenkungen der Abstand überbrückt wird.

Wesentliche Teile der unterhalb des oberen Trums des Gitterbandes gelagerten und bei hochgehobenem Gitterband von oben zugänglichen Aggregate, insbesondere die Bleche eines Tunkkastens einer Bodenüberziehstation, können zu Reinigungszwecken herausnehmbar angeordnet sein. Hier zeigt sich, daß die Erfindung auch vorteilhaft die Möglichkeit eröffnet, zumindest Teile von Aggregaten, die bei normalem Arbeiten mit der Überziehmaschine unterhalb des oberen Trums des Gitterbandes liegen, anders auszubilden, als dies bisher im Stand der Technik üblich ist. So können beispielsweise die Bleche eines Tunkkastens einer Bodenüberziehmaschine lose aufgelagert werden, so daß sie bei hochgehobenem aufgelagerten Gitterband von oben ohne weiteres ergriffen, abgenommen und z. B. auch auf ihrer Rückseite gereinigt werden können. Es ist nicht mehr erforderlich, diese Bleche festzuschrauben oder gar festzuschweißen. Gleiches gilt auch für Leitbleche, Bestandteile der Spanneinrichtung, Bodenabstreifwalzen und/oder Bestandteile der üblichen Rüttelvorrichtung.

Die üblicherweise unterhalb des unteren Trums des Gitterbandes angeordnete Mischkammer kann ausgangsseitig einen Stutzen für den Anschluß einer mit einer Spülmasse arbeitenden Reinigungseinrichtung aufweisen. Damit ist es möglich, während der Reinigung die Spülmasse in der Mischkammer aufzufangen und mit der Reinigungseinrichtung von der Mischkammer abzuziehen bzw. auf diese Art und Weise im Kreislauf zu bewegen. Wenn der Stutzen nach der Rückförderpumpe angeordnet und mit einem Ventil versehen ist, läßt sich sogar vorteilhaft die Rückförderpumpe, die normalerweise für den Rücktransport der Überzugsmasse in eine Temperiereinrichtung genutzt wird, vorteilhaft für die Umwälzung der Spülmasse durch die Reinigungseinrichtung nutzen.

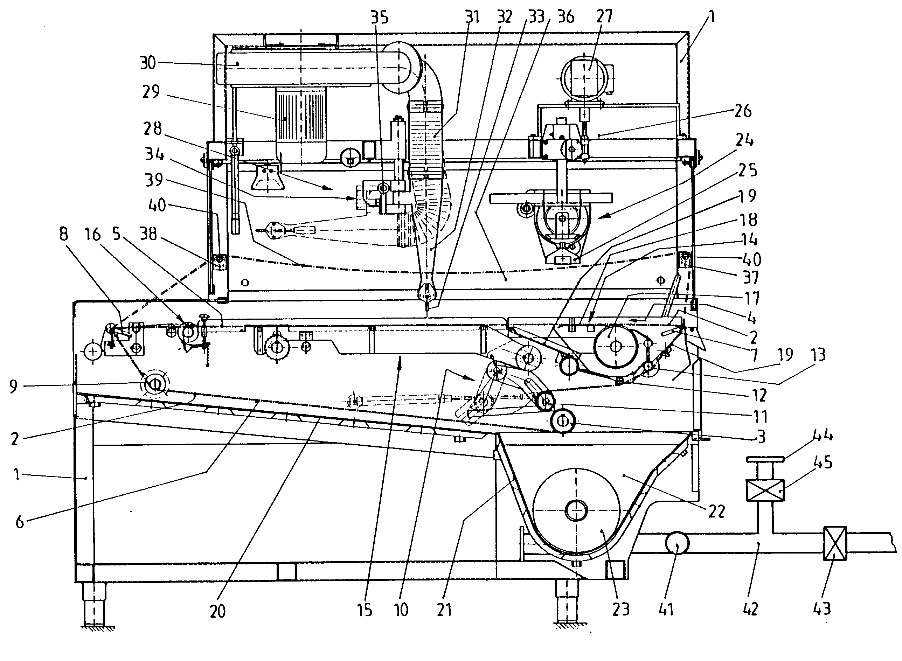

In der einzigen Zeichnung sind die für die Erfindung wesentlichen Teile einer Überziehmaschine in Seitenansicht dargestellt.

Die Überziehmaschine weist einen Rahmen 1 auf, der im wesentlichen symmetrisch zu einer Längsmittelebene der Überziehmaschine ausgebildet ist. Im unteren Bereich der Überziehmaschine ist ein Gitterband 2 als Endlosband angeordnet, welches von einer Antriebswalze 3 umlaufend gemäß Pfeil 4 angetrieben wird. Das Gitterband 2 ist in dicker strichpunktierter Linie in seiner normalen Anordnung gezeigt. Es besitzt ein oberes Trum 5 und ein unteres Trum 6. Das obere Trum 5 reicht eingangsseitig von einer Umlenkung 7, die als Leiste oder Welle ausgebildet sein kann, bis zu einer ausgangsseitigen Umlenkung 8, die ebenfalls als Leiste oder Welle ausgebildet ist. Im unteren Trum 6 ist das Gitterband 2 über eine weitere Umlenkwalze 9 zu der Antriebswalze 3 geführt. Es schließt sich eine Spanneinrichtung 10 mit Spannwalze 11 an. Weitere Umlenkwalzen 12 und 13 vervollständigen die Führung des unteren Trums 6 bis zum Erreichen der Umlenkung 7. Die Spanneinrichtung 10 ist in ihrer normalen Spannstellung in gestrichelter Linienführung verdeutlicht, während die durchgezogene Linienführung die entspannte Stellung darstellt. Die Entfernung der Spannwalze 11 in ihren beiden Endstellungen entspricht dem doppelten Spannweg der Spanneinrichtung 10.

Bei normaler Arbeitsweise der Überziehmaschine befindet sich das obere Trum 5 des Gitterbandes 2 etwa in der durch die Umlenkungen 7 und 8 festgelegte Ebene. Unterhalb des oberen Trums 5 des Gitterbandes 2 sind verschiedene Aggregate angeordnet. Zur Verdeutlichung sind beispielhaft eine Bodenüberziehstation 14, eine Rüttelvorrichtung 15, eine Bodenabstreichwelle 16 sowie weitere nicht näher bezeichnete Aggregate beispielhaft verdeutlicht. Diese Aggregate liegen unmittelbar unterhalb des oberen Trums 5 des Gitterbandes 2 und kommen bei ordnungsgemäßem Arbeiten der Überziehmaschine mit der flüssigen Überzugsmasse mehr oder weniger in Berührung, wobei sich die Überzugsmasse an diesen Teilen absetzt, so daß diese Aggregate bei einem Massewechsel gereinigt werden müssen. Die Bodenüberziehstation 14 weist eine Tunkwalze 17, ein Bodenwallblech 18 sowie im unteren Bereich verschiedene Bleche 19 auf, die ebenfalls mit der Schokolade in Kontakt kommen. Das Gitterband 2 ist unten von einer Wanne 20 umgeben, die in einer nach unten gezogenen Vertiefung 21 eine Mischkammer 22 mit einer dort angeordneten Mischschnecke 23 besitzt, in der sich die flüssige Schokolade sammelt und von wo aus die Schokolade durch eine nicht dargestellte Umwälzpumpe in bekannter Weise im Kreislauf geführt wird.

Im oberen Bereich der Überziehmaschine ist am Rahmen 1 eine Überziehstation 24 vorgesehen, deren wesentlicher Bestandteil ein Schleierkasten 25 sein kann, über den die aus der Mischkammer 22 abgepumpte Schokolade im freien Fall auf die Artikel auf dem oberen Trum 5 des Gitterbandes 2 gelangt. Die Überziehstation 24 besitzt eine Höhenverfahreinrichtung 26, die von einem Motor 27 angetrieben wird, um die Überziehstation 24 vertikal zu verfahren. Die Überziehstation 24 ist in einer solchen Stellung dargestellt, bei der sie maximal hochgefahren ist, so daß der Schleierkasten 25 von dem oberen Trum 5 des Gitterbandes 2 einen sehr großen Abstand aufweist, wie er nur zu Reinigungszwecken einstellbar ist. Es versteht sich, daß beim Arbeiten mit der Überziehmaschine der Schleierkasten 25 und damit die Überziehstation 24 wesentlich niedriger eingestellt sind, und zwar abgestimmt auf die Höhe und die Art der zu überziehenden Artikel auf dem Gitterband 2.

In Durchlaufrichtung der Artikel auf dem Gitterband 2 ist der Überziehstation 24 ein Gebläse 28 nachgeschaltet, welches einen Motor 29 für eine Turbine 30 zum Ansaugen und Beschleunigen von Luft aufweist. Die Luft gelangt über einen Schlauch 31 in eine Gebläsetüte 32 und strömt über eine düsenartige Lippe 33 auf die kurz zuvor mit flüssiger Schokolade überzogenen Artikel, so daß die Überschußschokolade abgeblasen wird, durch das obere Trum 5 des Gitterbandes 2 hindurchtritt und über die Wanne 20 in die Mischkammer 22 zurückfließt. Das Gebläse 28 weist eine Höhenverfahreinrichtung 34 auf, und die Gebläsetüte 32 ist um eine horizontale Achse 35 schwenkbar angeordnet. In durchgezogener Linienführung ist die Arbeitsstellung dargestellt. Etwa um 90° verschwenkt ist in strichpunktierter Linie die Reinigungsstellung verdeutlicht. Durch das Hochfahren und/oder Wegschwenken der Überziehstation 24 und/oder des Gebläses 28 wird oberhalb des oberen Trums 5 des Gitterbandes 2 Platz 36 in Form eines Freiraumes geschaffen, in den hinein das Gitterband 2 angehoben werden kann, wenn eine Reinigung der Aggregate 14, 15, 16, 10 usw. beim Massewechsel durchgeführt werden soll. Es versteht sich, daß zu diesem Zweck zunächst die Spanneinrichtung 10 entspannt werden muß, so daß das Gitterband 2 zumindest mit dem oberen Trum 5 frei beweglich für ein Anheben wird. Am Rahmen 1 sind in entsprechender Höhe über den Aggregaten 14, 15, 16 Auflager 37, 38 vorgesehen, die auf beiden Seiten des Rahmens 1 relativ zu dem Gitterband 2 angeordnet sind. Zum Zwecke des Hochhebens und Fixierens des Gitterbandes in der angegebenen Linie 39 werden Träger 40 unter das obere Trum 5 des Gitterbandes 2 gesteckt, nachdem die Spanneinrichtung 10 entspannt worden ist. Es ist sodann, d. h. nach dem Hochfahren der Überziehstation 24 und/oder dem Wegschwenken des Gebläses 28 möglich, die Träger 40 und damit das Gitterband 2 anzuheben und die Träger 40 in den Auflagern 37 und 38 abzusetzen. Damit entsteht vorteilhaft die freie Zugänglichkeit der Aggregate 14, 15, 16, 10, 3, 19, 20 usw., so daß eine Reinigung mit sehr viel größerer Sicherheit mit einer Spülmassen und ohne Versprühwirkung durch das Gitterband 2 erfolgen kann. Nach beendeter Reinigung wird die Spülmasse abgezogen, und die neue Masse kann in die Überziehmaschine aufgegeben werden. Es versteht sich, daß dann das Gitterband 2 wieder abgesenkt wird und mit der Spanneinrichtung 10 die erforderliche Spannung aufgebracht wird. Auch die Überziehstation 24 und das Gebläse 28 werden in ihre normale Wirkhöhe abgesenkt.

An die Mischkammer 22 ist in bekannter Weise eine Rückförderpumpe 41 angeschlossen. In einer Leitung 42 ist ein Ventil 43 vorgesehen, über welches in der Öffnungsstellung normalerweise die Schokoladenmasse zu einer Temperiereinrichtung zurückgeführt wird. Mit der Rückförderpumpe 41 kann auch die Entleerung der Überziehmaschine erfolgen. Die Leitung 42 ist mit einem Anschlußstutzen 44 und einem Ventil 45 versehen, an welches bei geschlossenem Ventil 43 während des Reinigungsvorganges mit der Spülmasse eine Reinigungseinrichtung angeschlossen werden kann, so daß unter Verwendung der Rückförderpumpe 21 die Spülmasse im Kreislauf bewegt werden kann. Es versteht sich, daß die Spülmasse mit einer lanzenartigen Einrichtung auf die zu reinigenden Aggregate geleitet wird und sich anschließend immer wieder in der Mischkammer 22 sammelt.

Eine oder beide der Umlenkungen 7 und 8 können auch ausbaubar und/oder hochschwenkbar vorgesehen sein, um entweder zumindest teilweise die Funktion der Entspannung der Spanneinrichtung 10 zu ersetzen oder zu begünstigen, so daß das Gitterband 2 zum Hochheben nach oben besser beweglich wird. Es ist aber auch möglich, daß die Umlenkungen 7 und/oder 8 nach oben hochschwenkbar am Rahmen 1 gelagert sind, so daß sie auch die Funktion der Träger 40 erfüllen können. Dabei kann entweder auf die Anordnung der Auflager 37 und 38 verzichtet werden, wobei dann auch diese Funktion von den hochgeschwenkten Umlenkungen 7 und 8 erfüllt wird, oder es ist möglich, die leistenartigen oder wellenartigen Umlenkungen 7 und 8 direkt in die Auflager 37 und 38 einzuhängen und damit das Gitterband 2 in der hochgehobenen Stellung während der Reinigungszeit zu sichern.

### BEZUGSZEICHENLISTE

- 1: - Rahmen
- 2: - Gitterband
- 3: - Antriebswalze
- 4: - Pfeil
- 5: - oberes Trum
- 6: - unteres Trum
- 7: - Umlenkung
- 8: - Umlenkung
- 9: - Umlenkwalze
- 10: - Spanneinrichtung
- 11: - Spannwalze
- 12: - Umlenkwalze
- 13: - Umlenkwalze
- 14: - Bodenüberziehstation
- 15: - Rüttelvorrichtung
- 16: - Bodenabstreichwelle
- 17: - Tunkwalze
- 18: - Bodenwallblech
- 19: - Blech
- 20: - Wanne
- 21: - Vertiefung
- 22: - Mischkammer
- 23: - Mischschnecke
- 24: - Überziehstation
- 25: - Schleierkasten
- 26: - Höhenverfahreinrichtung
- 27: - Motor
- 28: - Gebläse
- 29: - Motor
- 30: - Turbine
- 31: - Schlauch
- 32: - Gebläsetüte
- 33: - Lippe
- 34: - Höhenverfahreinrichtung
- 35: - Achse
- 36: - Platz
- 37: - Auflager
- 38: - Auflager
- 39: - Linie
- 40: - Träger
- 41: - Rückförderpumpe
- 42: - Leitung
- 43: - Ventil
- 44: - Anschlußstutzen
- 45: - Ventil

## Patentansprüche

1. Überziehmaschine zur Verarbeitung von Schokolade und ähnlichen Massen, mit einem Rahmen (1) und einem darin gelagerten, umlaufend angetriebenen Gitterband (2) zur Aufnahme der zu überziehenden Artikel, das über Umlenkungen (7, 8, 9 usw.) geführt und mit einer Spanneinrichtung (10) versehen ist, und mit Aggregaten (14, 15, 16 usw.), insbesondere einer Bodenüberziehstation (14) und einer Rüttelvorrichtung (15), unter dem oberen Trum (5) des Gitterbandes (2), **dadurch gekennzeichnet**, daß die Spanneinrichtung (10) einen das Hochheben des Gitterbandes (2) ermöglichenden vergrößerten Spannweg aufweist, so daß die Spülmasse ohne Versprühung durch das Gitterband (2) direkt auf die zu reinigenden Aggregate gerichtet werden kann.

2. Überziehmaschine zur Verarbeitung von Schokolade und ähnlichen Massen, mit einem Rahmen (1) und einem darin gelagerten, umlaufend angetriebenen Gitterband (2) zur Aufnahme der zu überziehenden Artikel, das über Umlenkungen (7, 8, 9 usw.) geführt und mit einer Spanneinrichtung (10) versehen ist, und mit Aggregaten (14, 15, 16 usw.), insbesondere einer Bodenüberziehstation (14) und einer Rüttelvorrichtung (15), unter dem oberen Trum (5) des Gitterbandes (2), insbesondere nach Anspruch 1, **dadurch gekennzeichnet**, daß eine oder beide endseitig angeordnete Umlenkungen (7, 8) ausbaubar und/oder gegenüber dem Rahmen (1) hochschwenkbar ausgebildet sind, so daß die Spülmasse ohne Versprühung durch das Gitterband (2) direkt auf die zu reinigenden Aggregate gerichtet werden kann.

3. Überziehmaschine nach Anspruch 1 oder 2, **dadurch gekennzeichnet**, daß Mittel zur Halterung des hochgehobenen Gitterbandes (2), insbesondere am Rahmen (1) der Überziehmaschine angeordnete Auflager (37, 38) zur Aufnahme von Trägern (40), vorgesehen sind.

4. Überziehmaschine nach Anspruch 1 oder 2, **dadurch gekennzeichnet**, daß oberhalb des oberen Trums (5) des Gitterbandes (2) eine Aufgabestation (24, 25) und/oder ein Gebläse (28) derart hochfahrbar angeordnet sind, daß dann Platz (36) für das Hochheben und Auflagern des Gitterbandes (2) geschaffen ist.

5. Überziehmaschine nach Anspruch 4, **dadurch gekennzeichnet**, daß das Gebläse (28) um eine horizontale Achse (35) quer zur Laufrichtung des Gitterbandes (2) derart schwenkbar angeordnet ist, daß dann Platz (36) für das Hochheben und Auflagern des Gitterbandes geschaffen ist.

6. Überziehmaschine nach einem der Ansprüche 1 oder 2, **dadurch gekennzeichnet**, daß eine oder beide endseitig angeordnete Umlenkungen (7, 8) am Rahmen (1) der Überziehmaschine hochschwenkbar gelagert sind.

7. Überziehmaschine nach Anspruch 6, **dadurch gekennzeichnet**, daß eine oder beide endseitig angeordnete Umlenkungen (7, 8) als Auflager (37, 38) für das hochgehobene Gitterband (2) ausgebildet sind.

8. Überziehmaschine nach einem der Ansprüche 1 bis 7, **dadurch gekennzeichnet**, daß eine oder beide endseitig angeordnete Umlenkungen (7, 8) in die Auflager (37, 38) am Rahmen (1) der Überziehmaschine einsetzbar sind und damit gleichzeitig die Träger (40) für das hochgehobene Gitterband (2) bilden.

9. Überziehmaschine nach einem der Ansprüche 1 bis 8, **dadurch gekennzeichnet**, daß wesentliche Teile der unterhalb des oberen Trums (5) des Gitterbandes (2) gelagerten und bei hochgehobenem Gitterband von oben zugänglichen Aggregate (14, 15, 16 usw.), insbesondere die Bleche (19) eines Tunkkastens einer Bodenüberziehstation (14), zu Reinigungszwecken herausnehmbar angeordnet sind.

10. Überziehmaschine nach Anspruch 1 oder 2, **dadurch gekennzeichnet**, daß die unterhalb des unteren Trums (6) des Gitterbandes (2) angeordnete Mischkammer (22) ausgangsseitig einen Stutzen (44) für den Anschluß einer mit einer Spülmasse arbeitenden Reinigungseinrichtung aufweist.

11. Überziehmaschine nach Anspruch 10, **dadurch gekennzeichnet**, daß der Stutzen (44) nach der Rückförderpumpe (41) angeordnet und mit einem Ventil (45) versehen ist.

## Claims

1. Coating machine for the processing of chocolate and similar masses, having a frame (1) and bearing therein a circularly driven grating belt (2) for the reception of the articles to be coated, which is guided by deflectors (7, 8, 9 etc.) and has a tensioning device (10), and with aggregates (14, 15, 16, etc.), especially a bottom-coating station (14) and a shaking device (15), arranged under the upper run (5) of the grating belt (2), **characterized in that** the tensioning device (10) has an extended travel enabling the lifting of the grating belt (2) so that the cleaning mass can be directed on the aggregates to be cleaned without spraying through the grating belt (2).

2. Coating machine for the processing of chocolate and similar masses, having a frame (1) and bearing therein a circularly driven grating belt (2) for the reception of the articles to be coated, which is guided by deflectors (7, 8, 9 etc.) and has a tensioning device (10), and with aggregates (14, 15, 16, etc.), especially a bottom-coating station (14) and a shaking device (15), arranged under the upper run (5) of the grating belt (2) especially according to claim 1, **characterized in that** one or both end-mounted deflectors (7, 8) are removable and/or liftable with respect to the frame (1) so that the cleaning mass can be directed on the aggregates to be cleaned without spraying through the grating belt (2).

3. The coating machine of claim 1 or 2, **characterized in that** means are provided to support the lifted grating belt (2), especially supports (37, 38) for carriers (40) located on the frame (1) of the coating machine.

4. The coating machine of claim 1 or 2, **characterized in that** a covering station (24, 25) and/or a blower (28) are arranged above the upper run (5) of the grating belt (2) in order to be raised, so that a space (36) for the lifting and supporting of the grating belt (2) is created.

5. The coating machine of claim 4, **characterized in that** the blower (28) is pivotably arranged about a horizontal axis (35) transverse to the direction of travel of the grating belt (2), so that the space (36) for the lifting and supporting of the grating belt (2) is created.

6. The coating machine of one of the claims 1 or 2, **characterized in that** one or both of the end-mounted deflectors (7, 8) are pivotably supported on the frame (1) of the coating machine

7. The coating machine of claim 6, **characterized in that** one or both of the end-mounted deflectors (7, 8) serve as supports (37, 38) for the lifted grating belt (2).

8. The coating machine of one of the claims 1 to 7, **characterized in that** one or both of the end-mounted deflectors (7, 8) are insertable into the supports (37, 38) on the frame (1) of the coating machine and thus function as carriers (40) for the lifted grating belt (2).

9. The coating machine of one of the claims 1 to 8, **characterized in that** essential parts of the aggregates (14, 15, 16, etc.) positioned below the upper run (5) of the grating belt (2) and being accessible from above when the grating belt (2) is lifted, especially the plates (19) of a dipping station of a bottom-covering station (14), are arranged removably for cleaning purposes.

10. The coating machine of claim 1 or 2, **characterized in that** the mixing chamber (22) arranged beneath the lower run (6) of the grating belt (2) has a connecting piece (44) on its outlet side to be connected to a cleaning device working with a cleaning mass.

11. The coating machine of claim 10, **characterized in that** the connecting piece (44) is arranged behind a return pump (41) and provided with a valve (45).

## Revendications

1. Machine à enrober pour le traitement de chocolat et de pâtes similaires, comportant un cadre (1) et une bande à grille (2) montée à l'intérieur de celui-ci, entrainée en continu, destinée à recevoir les articles à enrober, qui passe sur des renvois (7, 8, 9, etc.) et est pourvue d'un dispositif de tension (10), et comportant des ensembles (14, 15, 16, etc.), en particulier un poste à enrobage de fond (14) et un dispositif vibrant (15), sous le bras supérieur (5) de la bande à elle (2), caractérisée en ce que le dispositif de tension (10) présente une course de tension agrandie, permettant de relever la bande à grille (2), de sorte que la masse de lavage peut être directement orientée sur les ensembles à nettoyer, sans pulvérisation, à travers la bande à grille (2).

2. Machine à enrober pour le traitement de chocolat et de pâtes similaires, comportant un cadre (1)et une bande à grille (2) montée à l'intérieur de celui-ci, entraîné en continu, destinée à recevoir les articles à enrober, qui passe sur des renvois (7, 8, 9, etc.) et est pourvue d'un dispositif de tension (10), et comportant des ensembles (14, 15, 16, etc.), en particulier un poste à enrobage de fond (14) et un dispositif vibrant (15), sous le bras supérieur (5) de la bande à grille (2), en particulier selon la revendication 1, caractérisée en ce que un ou les des renvois (7, 8) disposés aux extrémités peuvent être démontés et/ou relevés par pivotement par rapport au cadre (1), de sorte que la masse de lavage peut être directement orientée vers les ensembles à nettoyer, sans pulvérisation, à travers la bande à grille (2).

3. Machine à enrober selon la revendication 1 ou 2, caractérisée en ce que sont prévus des moyens de fixation de la bande à grille (2) relevée, en particulier des appuis (37, 38), disposés sur le cadre (1) de la machine à enrober pour recevoir des supports (40).

4. Machine à enrober selon la revendication 1 ou 2, caractérisée en ce qu'au-dessus du brin supérieur (5) de la bande à grille (2), un poste de chargement (24, 25) et/ou une soufflante (28) sont disposés relevables, de manière que soit créée ensuite de la place (36) pour le relèvement et le support de la bande à grille (2).

5. Machine à enrober selon la revendication 4, caractérisée en ce que la soufflante (28) est disposée de manière à pouvoir pivoter autour d'un axe horizontal (35) transversalement à la direction de passage de la bande à grille (2), de manière que soit créée de la place (36) pour le relèvement et le support de la bande à grille.

6. Machine à enrober selon l'une des revendications 1 ou 2, caractérisée en ce qu'un ou les deux renvois (7, 8) disposés aux extrémités sont montés sur le cadre (1) de la machine à enrober de manière à pouvoir être relevés par pivotement.

7. Machine à enrober selon la revendication 6, caractérisée en ce qu'un ou les deux renvois (7, 8), disposés aux extrémités, sont conformés en tant qu'appuis (37, 38) pour la bande à grille (2) relevée.

8. Machine à enrober selon l'une des revendications 1 à 7, caractérisée en ce qu'un ou les deux renvois (7, 8), disposés aux extrémités, peuvent être insérés dans les appuis (37, 38), sur le cadre (1) de la machine à enrober, et forment ainsi en même temps les supports (40) pour la bande à grille (2) relevée.

9. Machine à enrober selon l'une des revendications 1 à 8, caractérisée en ce que des parties essentielles des ensembles (14, 15, 16, etc.) montés au-dessous du brin supérieur (5) de la bande à grille (2) et accessibles à partir du haut, lorsque la bande à grille est relevée, en particulier les tôles (19) d'un bac de trempage d'un poste d'enrobage de fond (14), sont disposées de manière à pouvoir être enlevées à des fins de nettoyage.

10. Machine à enrober selon la revendication 1 ou 2, caractérisée en ce que la chambre de mélange (22), disposée au-dessous du brin inférieur (6) de la bande à grille (2), comporte côté sortie une tubulure (44) pour le branchement d'un dispositif de nettoyage, fonctionnant avec une masse de lavage.

11. Machine à enrober selon la revendication 10, caractérisée en ce que la tubulure (44) est située derrière la pompe de refoulement (41) et est pourvue d'une vanne (45).
